# FASCICULE DE BREVET EUROPEEN

(11) **EP 3 017 229 B1**
(45) Date de publication et mention de la délivrance du brevet: **08.05.2019**
(21) Numéro de dépôt: 14739088.4
(22) Date de dépôt: 01.07.2014
(51) Int. Cl.: F16L 33/01

(54) **CONDUITE FLEXIBLE COMPORTANT EMBOUT DE CONNEXION AVEC ORGANE D'ESPACEMENT ET PROCÉDÉ DE MONTAGE ASOCIÉ**
FLEXIBLES ROHR UMFASSEND VERBINDUNGSENDSTÜCK MIT EINEM ABSTANDSELEMENT UND ENTSPRECHENDES VERFAHREN ZUR MONTAGE
FLEXIBLE PIPE COMPRISING CONNECTION END-PIECE WITH A SPACING MEMBER AND ASSOCIATED MOUNTING METHOD

(30) Priorité: 03.07.2013 FR 1356510
(43) Date de publication de la demande: 11.05.2016
(73) Titulaire: Technip France, 92400 Courbevoie (FR)
(72) Inventeur: BOURGET, Jean-Christophe, 76230 Bois Guillaume (FR); BRUNO, German Raul, 69006 Lyon (FR); DO, Anh Tuan, 95240 Cormeilles en Parisis (FR); TOSTE, Fernando Leitao Gonçalves, 20540-140 Rio de Janeiro - RJ (BR); LANGUI, Jean-François, 29101-340 Vila Velha - Espirito Santo (BR); REIS, Felipe, 22281-080 Rio de Janeiro - RJ (BR); CHAUDET, Guillaume, 76770 Malaunay (FR); CASTEL, Yves, 76150 La Vaupaliere (FR); LE NOUVEAU, Joël, 27100 Le Vaudreuil (FR); BUON, Eric, 76130 Mont Saint Aignan (FR); ANDRADE DOS REIS, Carlos Ronaldo, 22631-450 Rio de Janeiro - RJ (BR)
(74) Mandataire: Lavoix
(86) Numéro de dépôt international: PCT/EP2014/063997
(87) Numéro de publication internationale: WO 2015/000923

(56) Documents cités:
- WO-A1-2007/144553
- WO-A1-2013/074098
- JP-A- H04 171 390
- US-A- 3 874 064

## Description

La présente invention concerne une conduite flexible de transport de fluide, selon le préambule de la revendication 1.

La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface, ainsi que pour des raccordements intermédiaires.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des couches d'armures de traction s'étendant le long de la conduite.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, le nombre de cycles peut ainsi atteindre plus de 20 millions.

Il est donc nécessaire d'assurer une fixation particulièrement robuste entre les couches d'armures de traction et le corps de l'embout.

À cet effet, dans les embouts connus, l'ancrage des armures est assuré généralement par les frottements entre les fils d'armure et la résine époxy coulée dans la chambre délimitée par la voûte et le capot.

Par ailleurs, l'effet cabestan lié à la trajectoire en hélice des fils d'armure contribue également à l'ancrage des armures, cet effet pouvant être augmenté en modifiant le diamètre de l'hélice décrite par les fils dans l'embout par rapport au diamètre de cette hélice en longueur courante, par exemple en augmentant progressivement ce diamètre en suivant un cône ascendant, puis en le diminuant le long d'un cône descendant.

En outre, des déformations en forme de crochet, de vague ou de torsade peuvent être formées à l'extrémité de chaque fil d'armure pour être mises en prise dans la résine époxy, afin de réaliser un blocage mécanique s'opposant à la tension appliquée. Ces déformations initient l'effort nécessaire à la mise en place de l'effet cabestan.

Un tel embout ne donne pas entière satisfaction. Parfois, au cours du temps, l'ancrage des armures de traction devient défaillant en fatigue.

La défaillance est susceptible d'apparaître dans la partie arrière, au niveau de la zone de décollement des armures par rapport au diamètre de la longueur courante, cette partie étant de plus fragilisée lors du montage en raison d'un pliage et d'un dépliage des armures, nécessaire à la mise en place de l'embout.

Pour pallier ce problème, WO 2013/074098 décrit un embout de conduite flexible, dans lequel le sertissage de la gaine interne s'effectue par l'avant, afin d'éviter la déformation des éléments d'armure qui sont ici constitués en matériau composite.

Les tronçons d'extrémité des éléments d'armure adoptent une conformation divergente depuis l'arrière vers l'avant lors de la mise en place de l'embout, et conservent cette conformation dans l'embout.

Un tel embout ne donne pas entière satisfaction. En effet, la conformation des tronçons d'extrémité les place en contact les uns avec les autres dans la chambre de réception de la résine.

La surface de contact entre chaque tronçon d'extrémité et la résine est donc réduite par rapport à un embout de structure plus traditionnelle, ce qui réduit la résistance en fatigue de l'embout, ou ce qui nécessite d'allonger considérablement l'embout pour maintenir sa reprise en tension axiale.

Un but de l'invention est d'obtenir un embout d'une conduite flexible présentant une reprise en tension axiale efficace, dans lequel le risque de défaillance en fatigue, notamment dans les tronçons d'extrémité des armures est fortement diminué, sans pour autant allonger significativement la longueur de l'embout.

JP H04 171390 décrit un embout d'une conduite flexible selon le préambule de la revendication 1. US 3 874 064 décrit une autre conduite flexible.

A cet effet, l'invention a pour objet une conduite selon la revendication 1.

La conduite selon l'invention peut comprendre l'une ou plusieurs des caractéristiques des revendications 2 à 13, prise(s) isolément ou suivant toute combinaison techniquement possible.

L'invention a aussi pour objet un procédé de montage selon la revendication 14 ou 15.
- la figure 1 est une vue en perspective partiellement écorchée d'un tronçon central d'une première conduite flexible selon l'invention ;
- la figure 2 est une vue analogue à la figure 1 d'un embout de la conduite de la figure 1 ;
- la figure 3 est une vue d'un détail, pris en coupe suivant un plan axial médian, des couches d'armures dans l'embout de la figure 2 ;
- la figure 4 est une vue partielle, prise en coupe suivant un plan axial médian, de l'embout de la première conduite flexible selon l'invention ;
- la figure 5 est une vue analogue à la figure 4 de l'embout d'une deuxième conduite flexible selon l'invention ;
- la figure 6 est une vue analogue à la figure 4 de l'embout d'une troisième conduite flexible selon l'invention ;
- la figure 7 est une vue de côté des tronçons d'extrémité des éléments d'armure, dans l'embout de la figure 6 ;
- la figure 8 est une vue en coupe d'un organe d'espacement selon un des modes de réalisation de l'invention.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

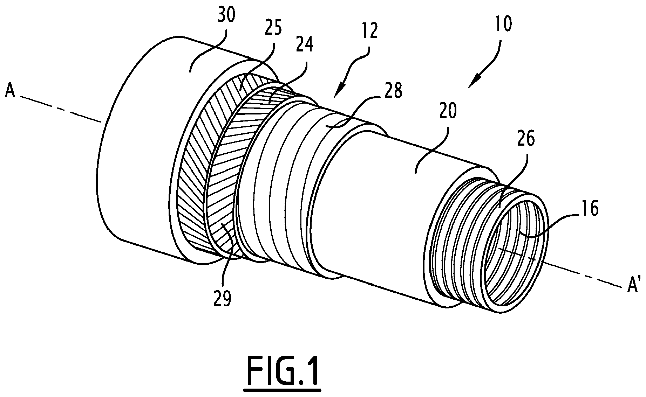

Une première conduite flexible 10 selon l'invention est illustrée partiellement par la figure 1.

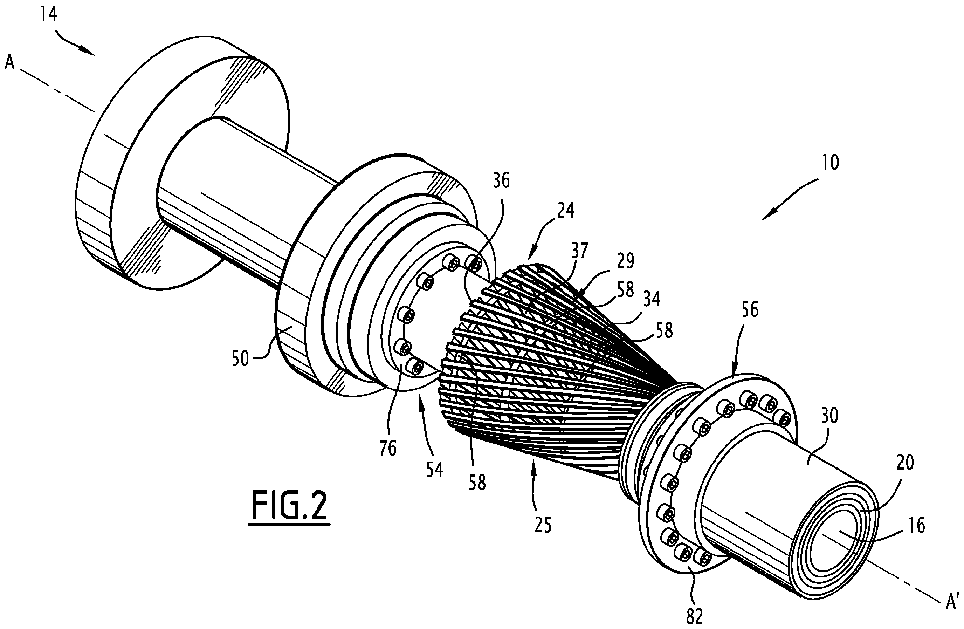

La conduite flexible 10 comporte un tronçon central 12 illustré en partie sur la figure 1. Elle comporte, à chacune des extrémités axiales du tronçon central 12, un embout d'extrémité 14 (non visible sur la figure 1) dont les parties pertinentes sont représentées sur la figure 2.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une couche d'armures intérieure 24, appliquée sur la voûte de pression 28 (ou sur la gaine 20 lorsque la voûte 28 est absente) et une couche d'armures extérieure 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone. Dans les exemples représentés sur les figures 2 à 5, les éléments d'armure 29 sont formés par des fils métalliques.

Comme on le verra plus bas, les éléments d'armure 29 présentent chacun un tronçon d'extrémité 34 introduit dans l'embout 14. Le tronçon d'extrémité 34 s'étend jusqu'à une extrémité libre disposée dans l'embout 14. Il présente avantageusement une trajectoire pseudo-hélicoïdale d'axe A-A' dans l'embout 14, l'hélice s'enroulant sur une enveloppe conique.

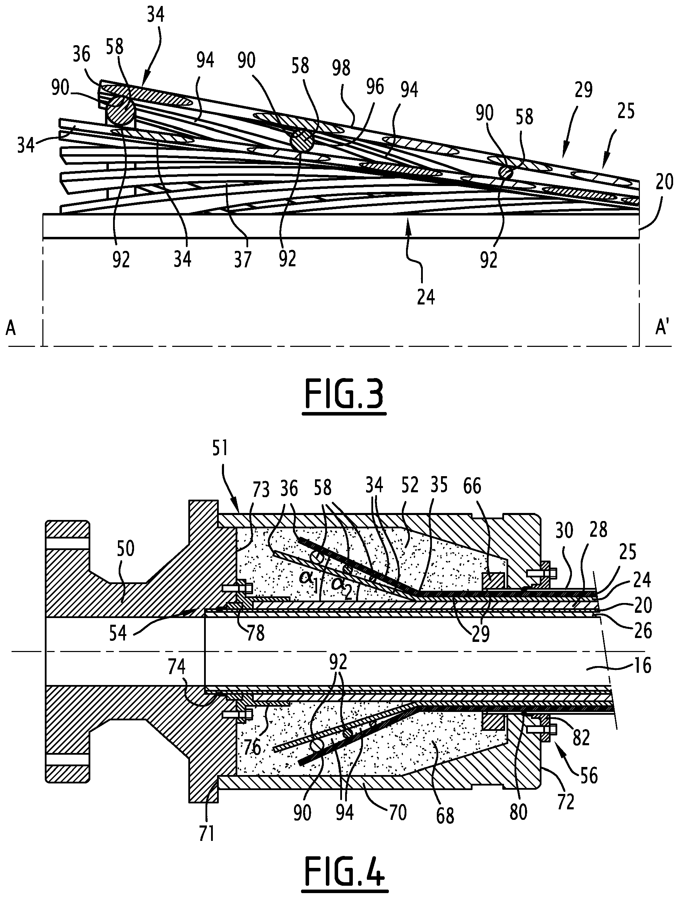

Dans l'exemple représenté sur les figures 2 et 3, pour chaque couche d'armures 24, 25, les tronçons d'extrémité 34 des éléments d'armure 29 s'étendent de manière divergente à l'écart de l'axe A-A', depuis un point de décollement arrière 35 vers une extrémité avant libre 36.

Les tronçons d'extrémité 34 des éléments d'armure 29 délimitent ainsi une enveloppe de forme sensiblement tronconique d'axe A-A' s'ouvrant vers l'avant. Ils forment ainsi une tulipe d'extrémité.

Comme illustre sur la figure 4, l'angle α1 d'ouverture des tronçons d'extrémité 34 des éléments d'armure 29 de la couche d'armures extérieure 25 est supérieur à l'angle α2 d'ouverture des tronçons d'extrémité 34 des éléments d'armure 29 de la couche d'armures intérieure 24.

En outre, pour chaque couche d'armures 24, 25, les tronçons d'extrémité 34 sont écartés latéralement les uns des autres. En particulier, les bords latéraux de chaque paire de tronçons d'extrémité 34 en regard délimitent entre eux des interstices circonférentiels 37, visibles sur la figure 2.

Dans cet exemple, les interstices circonférentiels 37 s'étendent entre les points de décollement arrière 35 et les extrémités avant libres 36. Ils présentent une largeur circonférentielle qui augmente depuis l'arrière vers l'avant.

Avantageusement, et comme on le verra plus bas, les tronçons d'extrémité 34 sont disposés lors de la fabrication de l'embout 10 pour présenter leur conformation la plus proche possible de leur conformation naturelle, dans laquelle ils sont le moins contraints. Cette conformation est obtenue en laissant les tronçons d'extrémité 34 de chaque couche 24, 25 se relâcher librement, ce qui leur permet d'adopter une configuration divergente, en forme de tulipe.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, outre les tronçons d'extrémité 34, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29.

L'embout 14 comporte en outre un ensemble avant 54 d'étanchéité autour de la gaine tubulaire 20, représenté schématiquement sur la figure 2, et un ensemble arrière 56 d'étanchéité autour de la gaine extérieure 30.

Selon l'invention, l'embout 14 comporte en outre au moins un organe d'espacement 58 disposé en appui intérieur sur les tronçons d'extrémité 34 des éléments d'armure 29 d'au moins une couche d'armures 24, 25.

Dans l'exemple représenté sur la figure 4, chaque organe d'espacement 58 est disposé en appui extérieur sur les tronçons d'extrémité 34 des éléments d'armure 29 de la couche d'armures intérieure 24, et en appui intérieur sur les tronçons d'extrémité 34 des éléments d'armure 29 de la couche d'armures extérieure 25.

Bien que ceci ne soit pas représenté sur la figure 4, on pourrait aussi disposer un ou plusieurs organes d'espacement en appui intérieur sur les tronçons d'extrémité 34 des éléments d'armure 29 de la couche d'armures intérieure 24.

L'embout 14 comprend de plus avantageusement un organe arrière 66 de maintien des couches d'armures 24, 25 situé dans la zone arrière de l'embout 14, et un matériau de remplissage 68 solide disposé dans la chambre 52 pour noyer les tronçons d'extrémité 34 et les organes d'espacement 58.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte d'extrémité 50 présente un alésage central destiné à recevoir l'extrémité de la gaine de pression 20 et à permettre l'écoulement du fluide circulant à travers le passage central 16 vers l'extérieur de la conduite 10.

Le capot 51 comporte une paroi périphérique 70 tubulaire s'étendant autour de l'axe A-A'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

Le capot 51 délimite la chambre 52 radialement vers l'extérieur. Une face arrière 73 de la voûte d'extrémité 50 délimite axialement la chambre 52 vers l'avant.

L'ensemble avant d'étanchéité 54 est avantageusement situé à l'avant de l'embout 14, en contact avec la voûte 50. Dans le mode de réalisation de la figure 2, l'ensemble avant d'étanchéité 54 est décalé axialement vers l'avant par rapport à chaque organe d'espacement 58.

De manière connue, il comporte une bague avant 74 de sertissage, destinée à venir en prise sur la gaine de pression 20, et une bride de sertissage 76. Le serrage de la bride 76 contre la voûte 50 a pour effet de déformer radialement la bague avant 74 de sertissage de sorte que cette dernière vienne en prise sur la gaine de pression 20. Dans l'exemple représenté sur la figure 2, dans lequel la conduite 10 comporte une voûte de pression 28, l'ensemble avant 54 comporte en outre une bague intermédiaire d'arrêt (non représentée) de la voûte de pression 28. La bague intermédiaire d'arrêt est interposée entre la bague avant 74 de sertissage et la bride de sertissage 76.

L'ensemble arrière d'étanchéité 56 est disposé à l'arrière de l'organe arrière de maintien 66, et à l'arrière de l'ensemble avant de sertissage 62.

Il comporte au moins une bague arrière de sertissage 80 sertissant la gaine externe 30, et une bride arrière 82 de sertissage serrage de la bague arrière 80, fixée sur le capot 51, avantageusement au niveau du bord arrière 72 de la paroi périphérique 70.

Dans l'exemple représenté sur les figures 3 et 4, l'embout 14 comporte une pluralité d'organes d'espacement 58 disjoints, espacés axialement les uns des autres le long de l'axe A-A', interposés entre les tronçons d'extrémité 34 en regard des éléments d'armure 29 des couches d'armures 24, 25.

Chaque organe d'espacement 58 est totalement contenu dans la chambre 52.

Chaque organe d'espacement 58 est ici formé par un anneau continu d'axe central A-A'. Dans cet exemple, l'anneau présente une section droite circulaire, qui en variante, peut-être elliptique ou polygonale, notamment en forme de quadrilatère par exemple trapèze, parallélogramme, rectangle, losange, carré, ou encore en forme de triangle, pentagone ou hexagone.

Chaque organe d'espacement 58 est réalisé avantageusement dans un matériau non métallique, par exemple un matériau plastique de type polyamide (nylon), élastomère, caoutchouc, ou encore résine.

En outre, ce matériau non métallique présente avantageusement une dureté supérieure ou égale à 80 shore A et préférentiellement supérieure ou égale à 50 shore D. Lorsque le matériau choisi est un caoutchouc ou un élastomère, une telle dureté empêche notamment qu'un organe d'espacement 58 ne se déforme et ne s'écrase excessivement au contact des couches d'armures 24, 25.

Comme illustré par la figure 3, les organes d'espacement 58 définissent, sur chaque tronçon d'extrémité 34, des zones de contact 90, 92 espacées axialement le long de l'axe A-A' dans le plan axial médian de la figure 3.

L'espacement axial entre deux zones de contact 90, 92 successives le long de l'axe A-A' est supérieur, notamment au moins deux fois supérieur, à l'étendue axiale maximale de l'organe d'espacement 58, prise le long de l'axe A-A' en regard de la zone de contact 90, 92.

Chaque organe d'espacement 58 présente une zone supérieure de contact 90 avec un tronçon d'extrémité 34 d'un élément d'armure 29 de la couche d'armures extérieure 25, et une zone inférieure de contact 92 avec un tronçon d'extrémité 34 d'un élément d'armure 29 de la couche d'armures intérieure 24.

Les zones de contact 90, 92 successives des organes d'espacement 58 avec chaque tronçon d'extrémité 34 espacées axialement le long du tronçon d'extrémité définissent entre elles des espaces intermédiaires 94 de contact entre le matériau de remplissage 68 et les tronçons d'extrémité 34.

Chaque espace intermédiaire 94 est délimité à l'avant et à l'arrière par un organe d'espacement 58. Il s'ouvre vers l'intérieur et vers l'extérieur entre les organes d'espacement 58. Il débouche vers l'extérieur et vers l'intérieur dans les interstices circonférentiels 37 définis entre chaque paire de tronçons d'extrémité 34 d'une couche d'armures 24, 25.

Ainsi, le matériau de remplissage 68 est propre à pénétrer dans chaque espace intermédiaire 94 à travers les interstices circonférentiels 37 pour venir en contact directement avec le tronçon d'extrémité 34, entre les zones de contact 90, 92 successives.

Ceci augmente significativement la surface de contact entre le matériau de remplissage 68 et chaque tronçon d'extrémité 34, ce qui augmente l'adhérence entre le matériau de remplissage 68 et chaque tronçon d'extrémité 34. La résistance en traction axiale de l'embout 14 est ainsi fortement améliorée.

De plus, la présence des organes d'espacement 58 au cours du montage de l'embout 14 permet de réduire le risque de rayer les tronçons d'extrémité 34 en les faisant frotter les uns contre les autres.

Par ailleurs, l'épaisseur radiale maximale de chaque organe d'espacement 58, prise par rapport à l'axe A-A', est généralement inférieure à 5 fois l'épaisseur radiale maximale du tronçon d'extrémité 34, prise dans la zone de contact 90, 92.

Ceci fournit un écartement radial maximal entre les tronçons d'extrémité 34 des couches d'armures 24, 25 avantageusement supérieur à 3 mm, notamment supérieur à 5 mm, et de préférence supérieur à 10 mm.

Cet écartement radial maximal est généralement inférieur à 30 mm, de préférence inférieur à 20 mm.

L'épaisseur du matériau de remplissage 68 présent dans l'espace intermédiaire 94 est ainsi maîtrisée et limitée, ce qui favorise sa tenue mécanique.

Dans l'exemple illustré par la figure 3, l'épaisseur radiale maximale de chaque organe d'espacement 58 diminue depuis l'avant vers l'arrière. Ainsi, l'organe d'espacement 58 situé le plus à l'avant présente une épaisseur radiale maximale supérieure à celle de l'organe d'espacement 58 situé le plus à l'arrière. Ceci conserve la forme naturelle des tronçons d'extrémité 34 de chaque couche d'armures 24, 25.

De plus, la présence des organes d'espacement 58 limite, voir supprime les contacts entre les éléments d'armure 29 des couches d'armures 24, 25 dans l'embout 14, ce qui augmente la tenue en fatigue.

En référence à la figure 2, l'organe arrière de maintien 66 est disposé autour des éléments d'armure 29 de la couche d'armures 25, au niveau de la partie arrière de l'embout 14.

A l'emplacement de l'organe arrière de maintien 66, les éléments d'armure 29 des couches d'armures 24, 25 sont enroulés hélicoïdalement avec le même rayon d'hélice que celui qu'ils ont au niveau du tronçon central 12.

L'organe arrière de maintien 66 se présente sous la forme d'un collier annuaire, et ne contribue pas significativement à la reprise des efforts de tension. Sa fonction est notamment d'empêcher la désorganisation des couches d'armures 24, 25 pendant le montage de l'embout 14, comme cela sera exposé plus loin.

Le matériau 68 de remplissage solide, tel qu'une résine polymérique thermodurcissable de type epoxy, est disposé dans la chambre 52 autour de l'organe arrière de maintien 66, de la voûte 50, et des tronçons d'extrémité 34 des éléments d'armure 29.

Le matériau 68 remplit sensiblement totalement la chambre 52. Il est de préférence injecté de manière fluide dans la chambre 52 et se solidifie dans celle-ci, en liant les tronçons d'extrémité 34 des éléments d'armure 29 à la voûte 50 et/ou au capot 51.

Comme indiqué plus haut, le matériau de remplissage 68 remplit les interstices circonférentiels 37 entre les tronçons d'extrémité adjacents 34 des éléments d'armure 29 de chaque couche d'armures 24, 25, ainsi que les espaces intermédiaires 94 définis entre les zones de contact 90, 92 de chaque organe d'espacement 58, entre deux couches d'armures 24, 25.

Ainsi, en référence à la figure 3, chaque tronçon d'extrémité 34 d'un élément d'armure 29 présente une face intérieure 96 et une zone extérieure 98 qui sont toutes les deux en contact avec le matériau de remplissage 68.

Le matériau de remplissage 68 entoure complètement chaque tronçon d'extrémité 34 sur tout le périmètre de celui-ci, sur chaque portion longitudinale entre deux zones de contact 90, 92 successives le long de l'axe A-A'.

La présence d'un contact entre le matériau de remplissage 68 et l'élément d'armure 29 au niveau d'au moins une portion des tronçons d'extrémité 34, de part et d'autre de l'élément d'armure 29 assure une reprise très efficace des efforts en traction. Ceci autorise une diminution de la longueur d'ancrage.

À titre d'exemple, pour une résistance au cisaillement de 2 MPa au niveau de l'interface entre l'élément d'armure 29 et le matériau de remplissage 68, un élément d'armure 29 de périmètre égal environ à 30 mm et de 500 mm de long est apte à reprendre un effort de tension d'environ 30 kN. Pour une nappe de 31 fils, ceci représente une tension reprise d'environ 1000 kN pour un embout 14 selon l'invention, alors que cette tension reprise est réduite à 500 kN si le tronçon d'extrémité 34 ne présente pas une portion longitudinale totalement en contact avec le matériau de remplissage 68.

L'assemblage de l'embout 14 selon l'invention est réalisé comme suit.

Initialement, les différentes couches de la conduite 10 sont coupées à la bonne longueur pour faire apparaître, sur la voûte 28, un tronçon d'extrémité libre 34 de chaque élément d'armure 29 des couches d'armures 24, 25.

Chaque tronçon d'extrémité libre 34 est initialement dépourvu de déformation radiale, notamment de déformation en forme de vague ou de crochet.

Puis, l'organe arrière de maintien 66 dans une configuration expansée est monté autour de la couche d'armures 25, avant d'être serré autour de cette dernière.

Puis, les tronçons d'extrémité 34 de chaque couche d'armures 24, 25 sont laissés libres d'adopter une conformation stable, sans contrainte extérieure.

Avantageusement, les tronçons d'extrémité 34 des éléments d'armure 29 des couches d'armures 24, 25 s'épanouissent vers l'avant pour présenter une forme divergente à l'écart de l'axe A-A' vers l'avant.

Par ailleurs, des interstices 37 circonférentiels apparaissent entre les tronçons d'extrémité 34 adjacents.

Les tronçons d'extrémité 34 des éléments d'armure 29 de la couche d'armures extérieure 25 sont alors légèrement soulevés à l'écart de l'axe A-A', avantageusement sans les replier vers l'arrière, pour introduire successivement les organes d'espacement 58, en les plaçant en appui sur l'extérieur des tronçons d'extrémité 34 des éléments d'armure 29 de la couche d'armures intérieure 24. Cette étape est avantageusement menée sans déformer plastiquement ou de façon irréversible les tronçons d'extrémité 34 des éléments d'armure 29, c'est-à-dire en se limitant à des déformations élastiques, ce qui évite de fragiliser le matériau et de dégrader sa résistance à la fatigue.

Puis, les tronçons d'extrémité 34 des éléments d'armure 29 de la couche d'armures extérieure 25 sont reposés en appui intérieur sur les organes d'espacement 58.

Dans une variante (non représentée), des organes d'espacement 58 sont aussi introduits de façon similaire en appui sur l'intérieur des tronçons d'extrémité 34 des éléments d'armure 29 de la couche d'armure intérieure 24.

La méthode d'introduction de ces organes d'espacement 58 consiste premièrement à soulever légèrement les tronçons d'extrémité 34 des éléments d'armure 29 à l'écart de l'axe A-A', deuxièmement à introduire successivement les organes d'espacement 58 en les plaçant en appui sur la face extérieure de la couche sous-jacente, par exemple sur la face extérieure de la voûte de pression 28, et troisièmement à rabattre vers l'axe A-A' les tronçons d'extrémité 34 des éléments d'armure 29 de sorte que ces derniers viennent reposer en appui intérieur sur les organes d'espacement 58.

Comme indiqué précédemment, les organes d'espacement 58 définissent, sur chaque tronçon d'extrémité 34, des zones de contact 90, 92 avec l'organe d'espacement 58 espacées axialement les unes des autres.

Les organes d'espacement 58 délimitent, entre les zones de contact 90, 92, des espaces intermédiaires 94 qui s'ouvrent vers l'intérieur et vers l'extérieur dans des interstices 37.

Ensuite, la voûte 50 et l'ensemble avant d'étanchéité 54 sont mis en place. Le capot 51 est alors mis en place et est fixé à la voûte 50.

L'ensemble arrière d'étanchéité 56 est ensuite mis en place et est fixé au capot 51.

Enfin, le matériau de remplissage 68 est introduit dans la chambre 52, avantageusement sous forme fluide.

Avantageusement, l'embout 14 est placé verticalement. Le matériau 68 remplit la chambre 52 de bas en haut et se solidifie entre la voûte 50 et le capot 51 autour des tronçons d'extrémité 34 des éléments d'armures 29.

En particulier, le matériau de remplissage 68 pénètre successivement dans les interstices 37 ménagés entre les tronçons d'extrémité 34 des éléments d'armure 29 de la couche d'armures extérieure 25, dans les espaces intermédiaires 94 définis entre les organes d'espacement 58, et dans les interstices 37 ménagés entre les tronçons d'extrémité 34 des éléments d'armure 29 de la couche d'armures intérieure 24.

Les tronçons d'extrémité 34 sont ainsi noyés dans le matériau de remplissage 68, avec une surface de contact maximale avec ce matériau de remplissage 68, vers l'intérieur comme vers l'extérieur.

En fonctionnement, lorsque l'embout 14 est raccordé à un autre embout ou à un ensemble de surface, la tension axiale transmise par les couches d'armures 24, 25 résultant du poids de la conduite 10 est reprise par les tronçons 34 noyés dans le matériau de remplissage 68, notamment grâce à la présence des organes d'espacement 58 délimitant des espaces intermédiaires 94 remplis de matériau de remplissage 68 qu'on contact direct avec les éléments d'armure 29.

Dans une variante (non représentée), des colliers sont appliqués autour des tronçons d'extrémité 34 des éléments d'armure 29 de la couche d'armures extérieure 25 pour limiter le diamètre extérieur de cette dernière, et obtenir une géométrie reproductible au niveau de la zone d'ancrage. Ces colliers permettent notamment d'éviter que les tronçons d'extrémité 34 des éléments d'armure 29 puissent être en contact avec le capot 51.

Dans une variante (non représentée) les organes d'espacement 58 sont constitués d'un matériau identique à celui du matériau de remplissage 68 de sorte qu'ils fusionnent ensuite avec le matériau de remplissage 68 pour former un continuum, ce qui permet d'éviter de générer des concentrations de contraintes dans le matériau de remplissage 68 au voisinage des organes d'espacement 58.

Dans une variante (non représentée), l'embout 14 comporte un organe d'espacement 58 continu délimitant une pluralité de spires.

L'organe d'espacement 58 est par exemple enroulé en hélice. Il est alors avantageusement formé par un profilé souple, par exemple un jonc en caoutchouc notamment du type de ceux utilisés pour réaliser des joints toriques d'étanchéité. Il peut aussi être constitué d'une corde ou d'une tresse de section carrée, rectangulaire ou ronde, ladite corde ou tresse étant par exemple constituée d'un assemblage de fibres de verre, de polyester ou d'aramide (Kevlar®). L'épaisseur de cet organe d'espacement 58 est avantageusement comprise entre 3 mm et 20 mm, préférentiellement comprise entre 5 mm et 15 mm.

Chaque spire délimite, le long de chaque tronçon d'extrémité 34, une succession de zones de contact 90, 92 avec chaque tronçon d'extrémité 34. Les spires successives délimitent entre les zones de contact 90, 92 des espaces intermédiaires 94, dans lesquels le matériau de remplissage 68 est propre à s'appliquer sur le tronçon d'extrémité 34.

Les spires successives ne sont pas en contact axial les unes avec les autres. Les espaces intermédiaires débouchent vers l'intérieur et vers l'extérieur.

Un tel organe d'espacement 58 favorise le remplissage du matériau 68 dans les espaces intermédiaires 94, le matériau pouvant s'écouler plus facilement en remontant le long de l'hélice définie par l'organe d'espacement 58 à partir de l'extrémité avant libre 36 des tronçons d'extrémité 34.

L'angle d'hélice des spires de l'organe d'espacement 58 est dans ce cas avantageusement supérieur à l'angle d'hélice des tronçons d'extrémité 34. Il est inférieur de préférence à 70°.

Dans le cas où l'angle d'hélice des tronçons d'extrémité 34 est inférieur ou égal à 35°, l'angle d'hélice de l'organe d'espacement 58 est par exemple compris entre 40° et 70°.

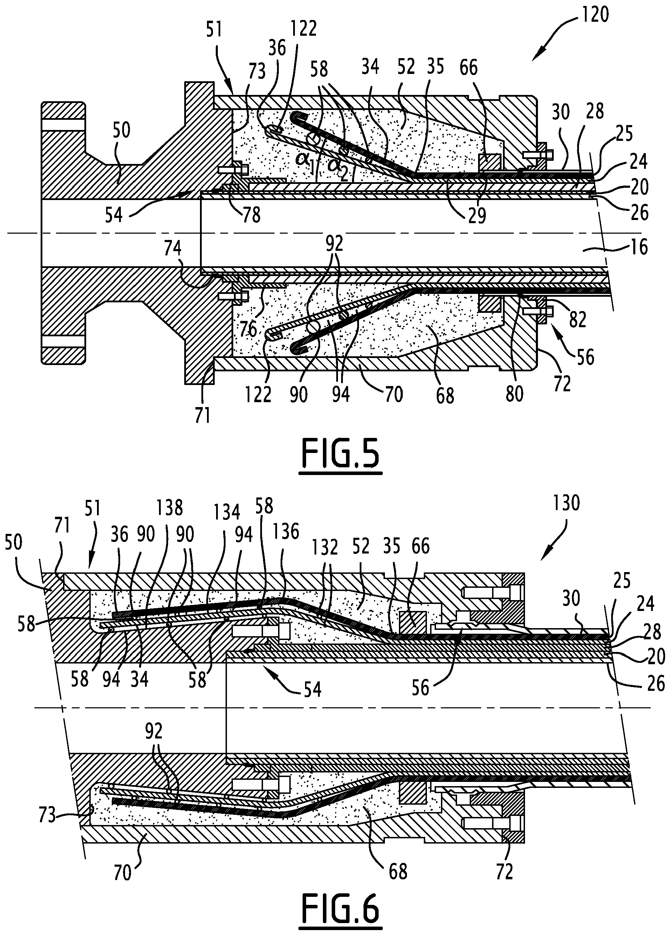

L'embout 14 d'une deuxième conduite flexible 120 selon l'invention est illustré par la figure 5. À la différence de l'embout 14 représenté sur la figure 4, une partie 122 d'ancrage supplémentaire est prévue aux extrémités avant libres 36 de chaque tronçon d'extrémité 34.

Dans l'exemple de la figure 5, la partie 122 d'ancrage est une déformation, notamment en forme de crochet replié vers l'arrière. En variante, la déformation 122 présente la forme d'une vague ou ondulation, d'une torsade ou encore d'une augmentation locale de la section transverse du tronçon d'extrémité 34.

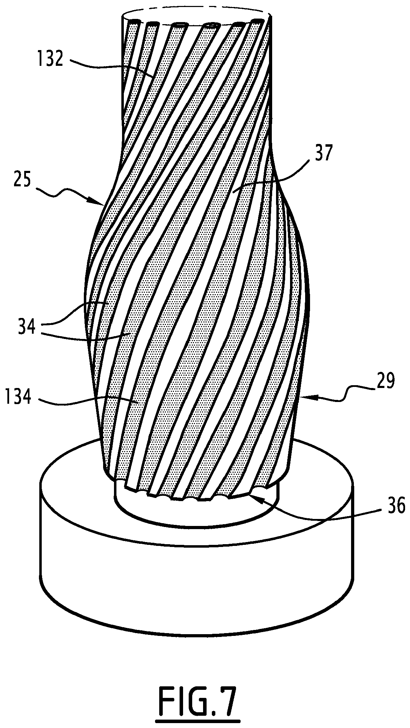

L'embout 14 d'une troisième conduite flexible 130 selon l'invention est illustré par les figures 6 et 7.

À la différence de l'embout 14 représenté sur la figure 4, chaque tronçon d'extrémité 34 d'un élément d'armure 29 présente une région arrière 132 qui diverge à l'écart de l'axe A-A' depuis l'arrière vers l'avant, et une région avant 134 qui converge vers l'axe A-A' depuis l'arrière vers l'avant.

La région arrière 132 s'étend vers l'avant depuis un point de décollement arrière 35 jusqu'à un point d'inflexion 136 délimitant la région avant 134.

La région avant 134 s'étend vers l'avant depuis le point d'inflexion 136 jusqu'à l'extrémité avant libre 36.

La voûte d'extrémité 50 présente ici une surface arrière 138 de support convergent vers l'axe A-A' depuis l'arrière vers l'avant. La région avant 134 est disposée en regard de la surface de support 138.

La surface arrière 138 présente une étendue transversale maximale supérieure à l'étendue transversale maximale de la gaine tubulaire 20 et à l'étendue transversale maximale de la voûte de pression 28, lorsqu'elle est présente.

L'ensemble avant d'étanchéité 54 est situé intérieurement sous les tronçons d'extrémité 34.

Dans l'exemple représenté sur la figure 6, l'embout 14 comporte au moins un organe d'espacement intérieur 58 interposé entre la surface de support 138 et les tronçons d'extrémité 34 des éléments d'armure 29 de la couche d'armures intérieure 24, et au moins un organe d'espacement extérieur 58 disposé entre les tronçons d'extrémité 34 des éléments d'armure 29 de la couche d'armures intérieure 24 et de la couche d'armures extérieure 25.

Dans cet exemple, l'organe d'espacement intérieur 58 est enroulé autour de la surface de support 138 pour présenter des spires successives.

Les spires définissent plusieurs régions de contact 90 avec chaque tronçon d'extrémité 34 des éléments d'armure 29 de la couche d'armures intérieure 24, à l'intérieur du tronçon d'extrémité 34.

De même, l'organe d'espacement extérieur 58 est enroulé autour de chaque tronçon d'extrémité 34 des éléments d'armure 29 de la couche d'armures intérieure 24 pour présenter des spires successives.

Les spires définissent plusieurs régions de contact 90 avec chaque tronçon d'extrémité 34 des éléments d'armure 29 de la couche d'armures extérieure 25, et plusieurs régions de contact 92 avec chaque tronçon d'extrémité 34 des éléments d'armure 29 de la couche d'armures intérieure 24.

Pour chaque tronçon d'extrémité 34, les régions de contact 90, 92 sont espacées axialement les unes des autres le long de l'axe A-A'.

Comme précédemment, les régions de contact 90, 92 définissent entre elles des espaces intermédiaires 94, où le matériau de remplissage 68 pénètre et entre en contact avec le tronçon d'extrémité 34 sur tout le périmètre du tronçon de l'extrémité 34.

Dans cet exemple, les régions de contact 90 entre chaque tronçon d'extrémité 34 d'un élément d'armure 29 de la couche d'armures extérieure 25 et l'organe d'espacement extérieur 58 sont situées dans la région avant 134 et dans la région arrière 132.

Les régions de contact 90 entre chaque tronçon d'extrémité 34 d'un élément d'armure 29 de la couche d'armures intérieure 24 et l'organe d'espacement intérieur 58 sont situées uniquement dans la région avant 134 du tronçon d'extrémité 34.

L'embout 14 décrit sur les figures 6 et 7 est particulièrement adapté pour des éléments d'armure 29 en matériau composite, notamment formés de rubans en matériau composite.

Ces éléments d'armure 29 comportent généralement d'une part une matrice en matériau plastique, notamment en matériau thermodurcissable par exemple en époxy ou thermoplastique (par exemple en polyamide 11, en polyamide 12, en polyamide 6-12, en polyfluorure de vinylidène (PVDF), en polysulfure, comme le polysulfure de phénylène (PPS), ou en polymère de type cétone comme le poly éther-éther-cétone (PEEK)), et d'autre part des fibres de renfort, notamment des fibres de verre, de carbone, de basait, de polyester aromatique (Vectran®) ou d'aramide (Kevlar®, Twaron®, Technora®) orientées suivant une même direction.

Des exemples d'éléments d'armure 29 de ce type sont décrits dans WO99/49259, US2009/000683, WO00/66927, WO02/095281, ou dans la Thèse « Material characterization and life prediction of a carbon fiber/thermoplastic matrix composite for use in non-bonded flexible risers », Blair Edward Russell, Faculty of the Virginia Polytechnic Institute and State University, 12 décembre 2000.

La conduite flexible 130 ainsi obtenue présente une masse relativement faible et peut être utilisée à grande profondeur, tout en garantissant un ancrage adéquat des éléments d'armure 29 composites.

En variante, l'embout 14 décrit sur les figures 6 et 7 comporte des éléments d'armure 29 métalliques, comme décrit précédemment.

Dans une autre variante du mode de réalisation des figures 6 et 7, l'embout 14 comporte une pluralité d'organes d'espacement 58 disjoints, espacés axialement les uns des autres, pour définir des zones de contact successives 90, 92, comme décrit précédemment.

Plus généralement, dans une variante, pour améliorer l'adhérence entre les tronçons d'extrémité 34 et le matériau de remplissage 68, un dégraissage des tronçons d'extrémités 34 est effectué avant la disposition du matériau de remplissage 68 dans la chambre 52. Il est également avantageux d'appliquer un revêtement primaire d'accrochage, par exemple au pinceau, comme cela est décrit dans la demande française FR 13 53698 de la Demanderesse.

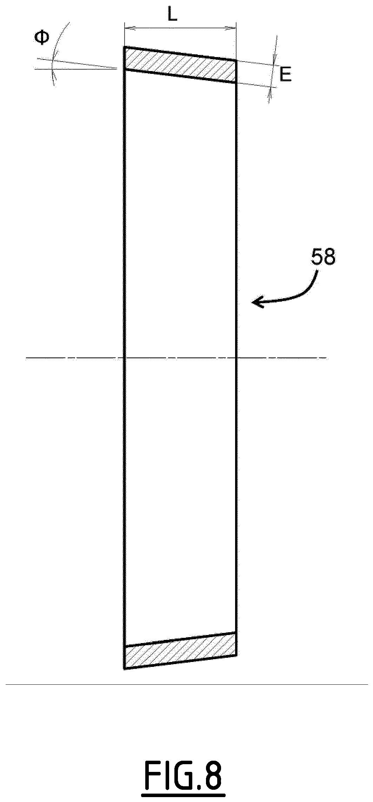

La figure 8 illustre un mode de réalisation particulier d'un organe d'espacement 58 pouvant être utilisé pour la mise en oeuvre de la présente invention.

Cet organe d'espacement 58 se présente sous la forme d'un anneau continu d'axe central A-A'. La face interne de cet anneau est un premier tronçon de cône d'axe A-A' et de demi angle au sommet Φ. La face externe de cet anneau est un deuxième tronçon de cône parallèle au premier tronçon de cône (même axe et même demi-angle au sommet).

Les deux faces latérales de cet anneau sont inscrites dans des plans perpendiculaires à l'axe A-A'. De la sorte cet anneau présente une section droite ayant la forme d'un parallélogramme dont les deux petites faces sont perpendiculaires à l'axe A-A' et dont les deux grandes faces sont inclinées d'un angle Φ avec l'axe A-A'.

La géométrie conique des faces internes et externes de cet organe d'espacement 58 permet d'épouser la forme sensiblement tronconique des tronçons d'extrémité 34 des éléments d'armure 29 lorsqu'ils forment une tulipe d'extrémité. Ceci a pour effet de faciliter la mise en place des organes d'espacement 58 et d'améliorer leur stabilité au cours du montage de l'embout.

L'angle Φ est avantageusement compris entre 5° et 15°. Ces organes d'espacements sont avantageusement réalisés en nylon. Leur épaisseur E est avantageusement de l'ordre de 4 mm et leur largeur L de l'ordre de 20 mm.

## Revendications

1. Conduite flexible (10 ; 120 ; 130) de transport de fluide, comprenant au moins une gaine tubulaire (20) et au moins une couche (24, 25) d'armures de traction disposée extérieurement par rapport à la gaine tubulaire (20), la couche d'armures (24, 25) comprenant une pluralité d'éléments d'armure (29) filiformes,
la conduite comprenant au moins un embout (14), monté à l'extrémité de la gaine tubulaire (20).
l'embout (14) comportant :
- au moins un tronçon d'extrémité (34) de chaque élément d'armure (29),
- une voûte d'extrémité (50) et un capot (51) fixé sur la voûte d'extrémité (50), la voûte d'extrémité (50) et le capot (51) délimitant entre eux une chambre (52) de réception du tronçon d'extrémité (34) ;
- un matériau de remplissage (68) de la chambre de réception (52), dans lequel est noyé le tronçon d'extrémité (34);
l'embout (14) comportant au moins un organe d'espacement (58) disposé en appui intérieur sur les tronçons d'extrémité (34) des éléments d'armure (29) d'au moins une couche d'armures (24, 25),
**caractérisée en ce que** le ou chaque organe d'espacement (58) définit, sur au moins un tronçon d'extrémité (34) d'un élément d'armure (29) de ladite couche d'armures (24, 25), des zones de contact (90, 92) espacées axialement le long dudit tronçon d'extrémité (34), les zones de contact (90, 92) délimitant entre elles des espaces intermédiaires (94) de contact entre le matériau de remplissage (68) et le tronçon d'extrémité (34).

2. Conduite flexible selon la revendication 1, **caractérisée en ce que** l'embout (14) comporte, pour au moins une couche d'armures (24, 25), une pluralité d'organes d'espacement (58) disjoints, espacés axialement les uns des autres, chaque organe d'espacement (58) présentant une zone de contact (90, 92) sur au moins un tronçon d'extrémité (34) d'un élément d'armure (29) de ladite couche d'armures (24, 25).

3. Conduite flexible selon la revendication 1, **caractérisée en ce que** l'embout (14) comporte, pour au moins une couche d'armures (24, 25), un organe d'espacement (58) enroulé à l'intérieur de la couche d'armures (24, 25), définissant des spires espacées axialement les unes des autres, chaque spire présentant une zone de contact (90, 92) sur au moins un tronçon d'extrémité (34) d'un élément d'armure (29) de la couche d'armures (24, 25).

4. Conduite flexible selon l'une quelconque des revendications précédentes, **caractérisée en ce que** l'embout (14) comporte au moins une couche d'armures intérieure (24), et au moins une couche d'armures extérieure (25), au moins un organe d'espacement (58) étant disposé entre les tronçons d'extrémité (34) des éléments d'armure (29) de la couche d'armures intérieure (24) et les tronçons d'extrémité (34) des éléments d'armure (29) de la couche d'armures extérieure (25) en définissant, sur chaque tronçon d'extrémité (34) des zones de contact (90, 92) espacées axialement le long du tronçon d'extrémité (34), les zones de contact (90, 92) délimitant entre elles des espaces intermédiaires (94) de contact entre le matériau de remplissage (68) et chaque élément d'armure (29).

5. Conduite flexible selon l'une quelconque des revendications précédentes, **caractérisée en ce que** l'épaisseur radiale d'un organe d'espacement (58) prise en regard d'une zone de contact avant (90) de l'organe d'espacement (58) avec un tronçon d'extrémité (34) d'un élément d'armure (29) d'au moins une couche d'armures (24, 25) est différente, et est avantageusement supérieure, à l'épaisseur radiale d'un organe d'espacement (58), prise en regard d'une zone de contact arrière de l'organe d'espacement (58) avec le même tronçon d'extrémité (34).

6. Conduite flexible selon la revendication 5, prise en combinaison avec la revendication 2, **caractérisée en ce que** l'embout (14) comporte au moins un organe d'espacement avant (58) définissant la zone de contact avant et au moins un organe d'espacement arrière (58) disjoint de l'organe d'espacement avant (58), l'organe d'espacement arrière (58) délimitant la zone de contact arrière, l'épaisseur radiale maximale de l'organe d'espacement avant (58) étant différente, avantageusement supérieure, à l'épaisseur radiale maximale de l'organe d'espacement arrière (58).

7. Conduite flexible selon l'une quelconque des revendications précédentes, **caractérisée en ce que** les tronçons d'extrémité (34) des éléments d'armure (29) d'au moins une couche d'armures (24, 25) sont espacés latéralement les uns des autres et définissent entre eux des interstices circonférentiels (37) de contact entre le matériau de remplissage (68) et l'élément d'armure (29).

8. Conduite flexible selon la revendication 7, **caractérisée en ce que** les interstices circonférentiels (37) et les espaces intermédiaires (94) communiquent entre eux pour définir, sur chaque tronçon d'extrémité (34), au moins une région de contact périphérique dans laquelle le matériau de remplissage (68) est en contact avec le tronçon d'extrémité (34) sur tout le périmètre du tronçon d'extrémité (34).

9. Conduite flexible selon l'une quelconque des revendications précédentes, **caractérisée en ce que** chaque tronçon d'extrémité (34) des éléments d'armure (29) d'au moins une couche d'armures (24, 25) s'étend de manière divergente à l'écart d'un axe longitudinal (A-A') de l'embout (14), depuis un point de décollement arrière (35) vers une extrémité avant libre (36).

10. Conduite flexible selon la revendication 9, **caractérisée en ce que** l'embout (14) comporte au moins une couche d'armures intérieure (24), et au moins une couche d'armures extérieure (25), l'angle d'ouverture des tronçons d'extrémité (34) des éléments d'armure (29) de la couche d'armures extérieure (25) étant supérieur à l'angle d'ouverture des tronçons d'extrémité (34) des éléments d'armure (29) de la couche d'armures intérieure (24), le ou chaque organe d'espacement (58) étant disposé en contact entre les tronçons d'extrémité (34) des éléments d'armure (29) de la couche d'armures intérieure (24) et les tronçons d'extrémité (34) des éléments d'armure (29) de la couche d'armures extérieure (25).

11. Conduite flexible selon l'une quelconque des revendications 1 à 8, **caractérisée en ce que** chaque tronçon d'extrémité (34) des éléments d'armure (29) d'au moins une couche d'armures (24, 25) comporte une région arrière (132) s'étendant de manière divergente à l'écart d'un axe longitudinal (A-A') de l'embout (14), depuis un point de décollement arrière (35), et une région avant (134) s'étendant de manière convergente vers l'axe longitudinal (A-A') de l'embout (14) depuis la région arrière (132) jusqu'à une extrémité avant libre (36),

12. Conduite flexible selon la revendication 11, **caractérisée en ce que** les éléments d'armure (29) sont réalisés au moins en partie à base de matériau composite.

13. Conduite flexible selon l'une quelconque des revendications 1 à 12, **caractérisée en ce que** l'embout (14) comporte au moins un collier externe entourant radialement les tronçons d'extrémité (34) de la couche d'armures la plus extérieure (25), le collier externe empêchant le contact entre le capot (51) et les tronçons d'extrémité (34) de la couche d'armures la plus extérieure (25).

14. Procédé de montage d'un embout (14) d'une conduite flexible (10 ; 120 ; 130), comprenant les étapes suivantes :
- fourniture d'une gaine tubulaire (20) ;
- disposition d'au moins une couche (24, 25) d'armures de traction à l'extérieur de la gaine tubulaire (20), la couche d'armures de traction (24, 25) comprenant une pluralité d'éléments d'armure (29) filiformes, chaque élément d'armure (29) comprenant un tronçon d'extrémité (34) ;
- mise en place d'une voûte d'extrémité (50) et d'un capot (51) fixé sur la voûte d'extrémité (50), la voûte d'extrémité (50) et le capot (51) délimitant entre eux une chambre (52) de réception du tronçon d'extrémité (34) ;
- introduction d'un matériau de remplissage (68) dans la chambre (52) de réception pour noyer le tronçon d'extrémité (34) ;
**caractérisé en ce qu'**il comporte, avant l'introduction du matériau de remplissage (68), la mise en place d'au moins un organe d'espacement (58) disposé en appui intérieur sur les tronçons d'extrémité (34) des éléments d'armure (29) d'au moins une couche d'armures (24, 25), le ou chaque organe d'espacement (58) définissant, sur au moins un tronçon d'extrémité (34) d'un élément d'armure (29) de ladite couche d'armures (24, 25), des zones de contact (90, 92) espacées axialement le long dudit tronçon d'extrémité (34), les zones de contact (90, 92) délimitant entre elles des espaces intermédiaires (94) de contact entre le matériau de remplissage (68) et le tronçon d'extrémité (34), après l'introduction du matériau de remplissage.

15. Procédé selon la revendication 14, **caractérisé en ce que** les tronçons d'extrémité (34) des éléments d'armure (29) d'au moins une couche d'armures sont relâchés pour adopter une conformation de repos avant la mise en place de l'organe d'espacement (58).

## Patentansprüche

1. Flexible Leitung (10; 120; 130) für den Transport eines Fluids, mindestens eine rohrförmige Ummantelung (20) und mindestens eine Zugarmierungsschicht (24, 25), die in Bezug auf die rohrförmige Ummantelung (20) außen angeordnet ist, umfasst, wobei die Armierungsschicht (24, 25) eine Mehrzahl von fadenförmigen Armierungselementen (29) umfasst,
wobei die Leitung mindestens ein Ansatzstück (14) umfasst, das am Ende der rohrförmigen Hülle (20) befestigt ist,
wobei das Ansatzstück (14) aufweist:
- mindestens einen Endabschnitt (34) jedes Armierungselements (29),
- ein Enddachelement (50) und eine Kappe (51), die an dem Enddachelement (50) befestigt ist, wobei das Enddachelement (50) und die Kappe (51) zwischen sich eine Kammer (52) zur Aufnahme eines Endabschnitts (34) begrenzen;
- ein Material (68) zum Füllen der Aufnahmekammer (52), in das der Endabschnitt (34) eingesenkt ist;
wobei das Ansatzstück (14) mindestens ein Abstandselement (58) aufweist, das auf den Endabschnitten (34) der Armierungselemente (29) mindestens einer Armierungsschicht (24, 25) mit innerer Abstützung angeordnet ist,
**dadurch gekennzeichnet, dass** jedes Abstandselement (58) auf mindestens einem Endabschnitt (34) eines Armierungselements (29) der Armierungsschicht (24, 25) Kontaktzonen (90, 92) definiert, die axial entlang des Endabschnitts (34) beabstandet sind, wobei die Kontaktzonen untereinander Kontaktzwischenräume (94) zwischen dem Füllmaterial (68) und dem Endabschnitt (34) begrenzen.

2. Flexible Leitung nach Anspruch 1, **dadurch gekennzeichnet, dass** das Ansatzstück (14) für mindestens eine Armierungsschicht (24, 25) eine Mehrzahl von getrennten Abstandselementen aufweist, die axial zueinander beabstandet sind, wobei jedes Abstandelement (58) eine Kontaktzone (90, 92) auf mindestens einem Endabschnitt (34) eines Armierungselements (29) der Armierungsschicht (24, 25) aufweist.

3. Flexible Leitung nach Anspruch 1, **dadurch gekennzeichnet, dass** das Ansatzstück (14) für mindestens eine Armierungsschicht (24, 25) ein Abstandselement (58) aufweist, das im Inneren der Armierungsschicht (24, 25) gewickelt ist und axial zueinander beabstandete Windungen definiert, wobei jede Windung eine Kontaktzone (90, 92) auf dem mindestens einen Endabschnitt (34) eines Armierungselements (29) der Armierungsschicht (24, 25) aufweist.

4. Flexible Leitung nach einem beliebigen der vorhergehenden Ansprüche, **dadurch gekennzeichnet, dass** das Ansatzstück (14) mindestens eine innere Armierungsschicht (24, 25) und mindestens eine äußere Armierungsschicht (24, 25) aufweist, wobei mindestens ein Abstandselement (58) zwischen den Endabschnitten (34) der Armierungselemente (29) der inneren Armierungsschicht (24) und den Endabschnitten (34) der Armierungselemente (29) der äußeren Armierungsschicht (25) angeordnet sind, wobei sie auf jedem Endabschnitt (34) entlang des Endabschnitts (34) axial beabstandete Kontaktzonen (90, 92) definieren, wobei die Kontaktzonen (90, 92) untereinander Kontaktzwischenräume zwischen dem Füllmaterial (68) und jedem Armierungselement (29) begrenzen.

5. Flexible Leitung nach einem beliebigen der vorhergehenden Ansprüche, **dadurch gekennzeichnet, dass** die radiale Dicke eines Abstandselements (58), die gegenüber einer vorderen Kontaktzone (90) des Abstandselements (48) mit einem Endabschnitt (34) eines Armierungselements (29) mindestens einer Armierungsschicht (24, 25) genommen wird, unterschiedlich ist und vorteilhafterweise größer als die radiale Dicke eines Abstandselements (58), die gegenüber einer hinteren Kontaktzone des Abstandselements (58) mit demselben Endabschnitt (34) genommen wird.

6. Flexible Leitung nach Anspruch 5, in Kombination mit Anspruch 2 gesehen, **dadurch gekennzeichnet, dass** das Ansatzstück (14) mindestens ein vorderes Abstandselement (58), das die vordere Kontaktzone definiert, und mindestens ein hinteres, vom vorderen Abstandselement (58) getrenntes Abstandselement aufweist, wobei das hintere Abstandselement (58) die hintere Kontaktzone begrenzt, wobei die radiale maximale Dicke des vorderen Abstandselements (58) unterschiedlich zu der, vorteilhafterweise größer als die maximale radiale Dicke des hinteren Abstandselements (58) ist.

7. Flexible Leitung nach einem beliebigen der vorhergehenden Ansprüche, **dadurch gekennzeichnet, dass** die Endabschnitte (34) der Armierungselemente (29) mindestens einer Armierungsschicht (24, 25) seitlich zueinander beabstandet sind und untereinander umfängliche Kontaktspaltweiten (37) zwischen dem Füllmaterial (68) und dem Armierungselement (29) definieren.

8. Flexible Leitung nach Anspruch 7, **dadurch gekennzeichnet, dass** die umfänglichen Spaltweiten (37) und die Zwischenräume (94) untereinander kommunizieren, um auf jedem Endabschnitt (34) mindestens ein Umfangskontaktgebiet zu definieren, in dem das Füllmaterial (68) in Kontakt mit dem Endabschnitt (34) über den ganzen Umfang des Endabschnitts (34) ist.

9. Flexible Leitung nach einem beliebigen der vorhergehenden Ansprüche, **dadurch gekennzeichnet, dass** jeder Endabschnitt (34) der Armierungselemente (29) mindestens einer Armierungsschicht (24, 25) sich in divergierender Weise entfernt von einer Längsachse (A-A') des Ansatzstückes (14) von einem hinteren Ablösungspunkt (35) zu einem freien vorderen Ende (36) erstreckt.

10. Flexible Leitung nach Anspruch 9, **dadurch gekennzeichnet, dass** das Ansatzstück (14) mindestens eine innere Armierungsschicht (24) und mindestens eine äußere Armierungsschicht (25) aufweist, wobei der Öffnungswinkel der Endabschnitte (34) der Armierungselemente (29) der äußeren Armierungsschicht (25) größer ist als der Öffnungswinkel der Endabschnitte (34) der Armierungselemente (29) der inneren Armierungsschicht (24), wobei das oder jedes Abstandselement (58) in Kontakt zwischen den Endabschnitten (34) der Armierungselemente (29) der inneren Armierungsschicht (24) und den Endabschnitten (34) der Armierungselemente (29) der äußeren Armierungsschicht (25) angeordnet ist.

11. Flexible Leitung nach einem beliebigen der Ansprüche 1 bis 8, **dadurch gekennzeichnet, dass** jeder Endabschnitt (34) der Armierungselemente (29) mindestens einer Armierungsschicht (24, 25) einen hinteren Bereich (132), der sich in divergierender Weise mit Abstand von einer Längsachse (A-A') des Ansatzstückes (14) von einem hinteren Ablösungspunkt (35) erstreckt, und einen vorderen Bereich (134), der sich in konvergierender Weise zu der Längsachse (A-A') des Ansatzstückes (14) von dem hinteren Bereich (132) bis zu einem freien vorderen Ende (36) erstreckt, aufweist.

12. Flexible Leitung nach Anspruch 11, **dadurch gekennzeichnet, dass** die Armierungselemente (29) mindestens teilweise auf Basis eines Verbundmaterials hergestellt sind.

13. Flexible Leitung nach einem beliebigen der Ansprüche 1 bis 12, **dadurch gekennzeichnet, dass** das Ansatzstück (14) mindestens einen äußeren Ring aufweist, der radial die Endabschnitte (34) der äußersten Armierungsschicht (25) umgibt, wobei der äußere Ring den Kontakt zwischen der Kappe (51) und den Endabschnitten (34) der äußersten Armierungsschicht (25) verhindert.

14. Verfahren zur Montage eines Ansatzstückes (14) einer flexiblen Leitung (10; 120; 130), folgende Schritte umfassend:
- Bereitstellen einer rohrförmigen Umhüllung (20);
- Anordnen mindestens einer Zugarmierungsschicht (24, 25) außerhalb der rohrförmigen Umhüllung (20), wobei die Zugarmierungsschicht (24, 25) eine Vielzahl von fadenförmigen Armierungselementen (29) umfasst, und jedes Armierungselement (29) einen Endabschnitt (34) umfasst;
- Einsetzen eines Enddachelementes (50) und einer Kappe (51), die auf dem Enddachelement (50) befestigt ist, wobei das Enddachelement (50) und die Kappe (51) zwischen sich eine Kammer (52) zur Aufnahme eines Endabschnitts (34) begrenzen;
- Einführen eines Füllmaterials (68) in die Aufnahmekammer (52), um den Endabschnitt (34) einzusenken;
**dadurch gekennzeichnet, dass** es vor dem Einführen des Füllmaterials (68) das Einsetzen mindestens eines Abstandselements (58) aufweist, das in innerer Anlage an den Endabschnitten (34) der Armierungselemente (29) mindestens einer Armierungsschicht (24, 25) angeordnet ist, wobei das oder jedes Abstandselement (58) auf mindestens einem Endabschnitt (34) eines Armierungselements (29) der Armierungsschicht (24, 25) axial entlang des Endabschnitts (34) beabstandete Kontaktzonen (90, 92) definiert, wobei die Kontaktzonen (90, 92) untereinander Kontaktzwischenräume (94) zwischen dem Füllmaterial (68) und dem Endabschnitt (34) nach der Einführung des Füllmaterials begrenzen.

15. Verfahren nach Anspruch 14, **dadurch gekennzeichnet, dass** die Endabschnitte (34) der Armierungselemente (29) mindestens einer Armierungsschicht entspannt werden, um eine Ruhegestalt vor dem Einsetzen des Abstandselements (48) anzunehmen.

## Claims

1. A flexible pipe (10 ; 120 ; 130) for conveying a fluid, the flexible pipe comprising at least one tubular sheath (20) and at least one layer (24, 25) of tensile armors positioned externally with respect to the tubular sheath (20), the armor layer (24, 25) comprising a plurality of wire-shaped armor elements (29),
the flexible pipe comprising at least one endpiece (14), fixed at an end of the tubular sheath (20),
the endpiece including:
- at least one end segment (34) of each armor element (29),
- an end vault (50) and a cover (51) attached on the end vault (50), the end vault (50) and the cover (51) delimiting between them a chamber (52) for receiving the at least one end segment (34);
- a material for filling (68) the receiving chamber (52), in which the at least one end segment (34) is embedded;
the endpiece (14) comprising at least one spacing member (58) positioned so as to internally bear upon the end segments (34) of the armor elements (29) of at least one armor layer (24, 25),
**characterized in that** the at least one spacing member (58)defines, on at least one end segment (34) of a armor element (29) of said armor layer (24, 25), contact areas (90, 92) axially spaced apart along said end segment, the contact areas delimiting between them intermediate contact spaces (94) between the filling material (68) and the at least one end segment (34).

2. The flexible pipe according to claim 1, **characterized in that** the endpiece (14) includes, for at least one armor layer (24, 25), a plurality of disconnected spacing members (58), axially spaced apart from each other, each spacing member (58) having a contact area (90, 92) on at least one end segment (34) of a armor element (29) of said armor layer (24, 25).

3. The flexible pipe according to claim 1, **characterized in that** the endpiece (14) includes, for at least one armor layer (24, 25), a spacing member (58) wound inside the armor layer (24, 25), defining turns axially spaced apart from each other, each turn having a contact area (90, 92) on at least one end segment (34) of a armor element (29) of the armor layer (24, 25).

4. The flexible pipe according to any one of the preceding claims, **characterized in that** the endpiece (14) includes at least one inner armor layer (24), and at least one outer armor layer (25), at least one spacing member (58) being positioned between the end segments (34) of the armor elements (29) of the inner armor layer (24) and the end segments (34) of the armor elements (29) of the outer armor layer (25) by defining, on each end segment (34), contact areas (90, 92) axially spaced apart along the end segment (34), the contact areas (90, 92) delimiting between them intermediate contact spaces (94) between the filling material (68) and each armor element (29).

5. The flexible pipe according to any one of preceding claims, **characterized in that** the radial thickness of a spacing member (58) taken facing a front contact area (90) of the spacing member (58) with an end segment (34) of a armor element (29) of at least one armor layer (24, 25) is different, and advantageously higher, from the radial thickness of a spacing member (58), taken facing a rear contact area of the spacing member (58) with the same end segment (34).

6. The flexible pipe according to claim 5, taken in combination with claim 2, **characterized in that** the endpiece (14) includes at least one front spacing member (58) defining the front contact area and at least one rear spacing member (58) disconnected from the front spacing member (58), the rear spacing member (58) delimiting the rear contact area, the maximum radial thickness of the front spacing member (58) being different, advantageously higher, from the maximum radial thickness of the rear spacing member (58).

7. The flexible pipe according to anyone of the preceding claims, **characterized in that** the end segments (34) of the armor elements (29) of at least one armor layer (24, 25) are laterally spaced apart from each other and define between them circumferential interstices (37) for contact between the filling material (68) and the armor element (29).

8. The flexible pipe according to claim 7, wherein the circumferential interstices (37) and the intermediate spaces (94) communicate with each other in order to define, on each end segment (34), at least one peripheral contact region in which the filling material (68) is in contact with the end segment over the whole of the perimeter of the end segment (34).

9. The flexible pipe according to any one of preceding claims, **characterized in that** each end segment (34) of the armor elements (29) of at least one armor layer (24, 25) extends in a divergent way away from a longitudinal axis (A-A') of the endpiece (14), from a rear detachment point to a free front end (36).

10. The flexible pipe according to claim 9, **characterized in that** the endpiece (14) comprises at least one inner armor layer (24), and at least one outer armor layer (25), the opening angle of the end segments (34) of the armor elements (29) of the outer armor layer (25) being greater than the opening angle of the end segments (34) of the armor elements (29) of the inner armor layer (24), the at least one spacing member (58) being positioned in contact between the end segments (34) of the armor elements (29) of the inner armor layer (24) and the end segments (34) of the armor elements (29) of the outer armor layer (25).

11. The flexible pipe according to any one of claims 1 to 8, **characterized in that** each end segment (34) of the armor elements (29) of at least one armor layer (24, 25) includes a rear region (132) extending in a divergent way away from a longitudinal axis (A-A') of the endpiece (14), from a rear detachment point (35), and a front region (134) extending in a convergent way towards the longitudinal axis (A-A') of the endpiece (14) from the rear region (132) as far as a free front end (36).

12. The flexible pipe according to claim 11, **characterized in that** the armor elements (29) are at least partly made from a composite material.

13. The flexible pipe according to any one of claims 1 to 12, **characterized in that** the endpiece (14) includes at least one external collar radially surrounding the end segments (34) of the outmost armor layer (25), the external collar preventing contact between the cover (51) and the end segments of the outmost armor layer (25).

14. A method for mounting an endpiece (14) of a flexible pipe (10; 120; 130), comprising:
- providing a tubular sheath (20);
- positioning at least one layer (24, 25) of tensile armors outside the tubular sheath (20), the at least one layer of tensile armors (24, 25) comprising a plurality of wire-shaped armor elements (29), each armor element (29) comprising an end segment (34);
- setting into place an end vault (50) and a cover (51) attached on the end vault (50), the end vault (50) and the cover (51) delimiting between them a chamber (52) for receiving the end segment (34) ;
- introducing a filling material (68) into the receiving chamber (52) in order to embed the end segment (34);
- before introducing the filling material (68), setting into place of at least one spacing member (58) positioned so as to internally bear upon the end segments (34) of the armor elements (29) of at least one armor layer (24, 25), the at least one spacing member (58) defining, on at least one end segment (34) of a armor element (29) of said armor layer (24, 25), contact areas (90, 92) axially spaced apart along said end segment (34), the contact areas (90, 92) delimiting between them intermediate contact spaces (94) between the filling material (68) and the end segment (34), after introducing the filling material (68).

15. The method according to claim 14, **characterized in that** the end segments (34) of the armor elements (29) of at least one armor layer are released so as to adopt a rest conformation before setting into place the spacing member (58).
